(19) Europäisches Patentamt
European Patent Office
Office européen des brevets

(11) **EP 1 876 605 A1**

(12) **EUROPEAN PATENT APPLICATION**
published in accordance with Art. 153(4) EPC

(43) Date of publication:
**09.01.2008 Bulletin 2008/02**

(21) Application number: **06714918.7**

(22) Date of filing: **28.02.2006**

(51) Int Cl.:
*H01B 5/14* (2006.01)    *H01B 1/24* (2006.01)
*H01B 13/00* (2006.01)    *C08J 5/18* (2006.01)
*C08K 7/06* (2006.01)    *C08L 101/00* (2006.01)
*D01F 9/127* (2006.01)    *C01B 31/02* (2006.01)

(86) International application number:
**PCT/JP2006/303792**

(87) International publication number:
**WO 2006/117924 (09.11.2006 Gazette 2006/45)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **28.04.2005 JP 2005132691**

(71) Applicants:
• **Parker, Corporation
Tokyo 103-8588 (JP)**
• **Bussan Nanotech Research Institute Inc.
Tokyo 100-0004 (JP)**

(72) Inventors:
• **NATORI, Toshiki
Bussan Nanotech Research Inst.Inc.
Chiyoda-ku, Tokyo 1000004 (JP)**
• **ASHIDA, Tadashi
Bussan Nanotech Research Inst.Inc.
Chiyoda-ku, Tokyo 1000004 (JP)**
• **SHAN, Jiayi
Bussan Nanotech Research Institute Inc
Chiyoda-ku, Tokyo 1000004 (JP)**
• **TSUKADA, Takayuki
Bussan Nanotech Research Ins.Inc
Chiyoda-ku, Tokyo 1000004 (JP)**
• **SUBIANTORO
c/o Parker Corporation.
Chuo-ku, Tokyo 1038588 (JP)**
• **HANDA, Koichi
c/o Parker Corporation.
Chuo-ku, Tokyo 1038588 (JP)**

(74) Representative: **Brykman, Georges
Osha Liang
121, Avenue des Champs Élysées
75008 Paris (FR)**

(54) **TRANSPARENT ELECTRICALLY CONDUCTIVE FILM, AND COATING COMPOSITION FOR TRANSPARENT ELECTRICALLY CONDUCTIVE FILM**

(57) The disclosed is a transparent conductive film which comprises a matrix resin and carbon fibrous structures added to the matrix, the carbon fibrous structure comprising carbon fibers each having an outside diameter of 15 - 100 nm, wherein the carbon fibrous structure further comprises a granular part with which two or more carbon fibers are tied together in the state that the concerned carbon fibers are externally elongated therefrom, and wherein the granular part is produced at a growth process of the carbon fibers. When the transparent conductive film is formed at a thickness of 0.1 - 5 $\mu$m on a glass substrate, it shows a surface resistivity of not more than 1. 0 x $10^{12}$ $\Omega/\square$, and a total light transmittance of not less than 30%. Coating composition for the conductive transparent film is prepared by using a media mill equipped with beads having an average diameter of 0.05 - 1.5 mm to disperse the carbon fibrous structures into the liquid resinous composition.

**FIG. 5**

EP 1 876 605 A1

**Description**

TECHNICAL FIELD

This invention relates to a transparent conductive film and a coating composition for the transparent conductive film. More particularly, this invention relates to a transparent conductive film which shows good transparency while possesses a high conductivity and a coating composition for forming the transparent conductive film.

RELATED ART

Heretofore, the transparent conductive film has been utilized as an electrode material for a liquid crystal display device, an organic EL device, or other various electronic devices, etc. , and for a purpose of removing static electricity at a member through which the opposite side can be seen and which hates dust attachment and thus necessitating the exclusion of dust attachment, e.g. partitions of clean rooms, and inspection windows of various test equipments.

As such transparent conductive film, inorganic acid type materials such as ITO and IZO, etc. , and metal evaporated films have been widely developed. However, there are several restrictions on these materials, such as the difficulty of controlling electrical characteristics thereof, and the limited range of applicable substrate materials.

Another type of conductive film is also known, of which conductivity is imparted by particles of a certain material such as metal, metal oxide, carbon and etc., added to the matrix of the film. Further, a transparent conductive resin board which has long carbon fibers blended in a thermoplastic resin as the matrix of the board has been proposed in Patent Literatures 1 and 2. Other transparent conductive resin boards have been also proposed in Patent Literature 3, wherein carbon nanotubes have been added in a thermoplastic resin in the condition that the carbon nanotubes have been dispersed mutually independent, or bundles each of which are composed of some carbon nanotubes have been dispersed mutually independent.

In the transparent conductive resin boards shown in Patent Literatures 1 - 3, however, it is difficult to disperse uniformly the fibers throughout the matrix thermoplastic resin since it is necessary to blend the long carbon fibers or carbon nanotubes in the single fiber form with the matrix thermoplastic resin. Therefore, it can be hardly expected that the conductivity of the boards are even in plane. When kneading force is heighten so as to enhance the dispersibility of the carbon fibers into the matrix, an unfortunate result that the fibers cut into shreds will be caused, which is followed by the necessity of a boost in amount of the fibers to be added in order to achieve a predetermined conductivity. The boost will result in a reduction of transparency of the board.

Patent Literature 1: JP-2001-62952A
Patent Literature 2: JP-2004-195993A
Patent Literature 3: JP-2004-230690A

DISCROSURE OF THE INVENTION

PROBLEM TO BE SOLVED BY THE INVENTION

Therefore, this invention aims to provide a new transparent conductive film and a coating composition therefor capable of solving above mentioned problems in the arts.

This invention also aims to provide a transparent conductive film and a coating composition therefor, which can possess improved and well controllable electrical properties by a small amount addition of additive or filler without damaging the characteristic of the matrix, while maintaining a good transparency of the film.

MEANS FOR SOLVING THE PROBLEM

As a result of our diligent study for solving the above problems, we, the inventors, has found that the followings are effective at improving the electrical properties of the matrix even at a limited additive amount, and finally accomplished the present invention:

> To adapt carbon fibers having a diameter as small as possible;
> To make an areolar structure of the carbon fibers where the fibers are mutually combined tightly so that the fibers do not behave individually and which sustains their areolar state in the resin matrix;
> To adapt as carbon fibers per se ones which are designed to have a minimum amount of defects; and
> To use a particular dispersion treatment in order to disperse the fibrous structures throughout the matrix uniformly without destroying the fibrous structures.

The present invention to solve the above mentioned problems is, therefore, a transparent conductive film which comprises a matrix resin and carbon fibrous structures added to the matrix, the carbon fibrous structure comprising carbon fibers each having an outside diameter of 15 - 100 nm, wherein the carbon fibrous structure further comprises a granular part with which two or more carbon fibers are tied together in the state that the concerned carbon fibers are externally elongated therefrom, and wherein the granular part is produced at a growth process of the carbon fibers.

The present invention also discloses the transparent conductive film in which the carbon fibrous structures are added at an amount in the range of 1 to 25 parts by weight based on 100 parts by weight of the matrix resin. The present invention further discloses the transparent conductive film in which the transparent conductive film shows a surface resistivity of not more than $1.0 \times 10^{12}$ $\Omega/\square$, and a total light transmittance of not less than 30%, when the transparent conductive film is formed at a thickness of 0.1 - 5 $\mu$m on a glass substrate.

In another aspect, the present invention to solve the above mentioned problems is a coating composition for transparent conductive film, which composition comprises a liquid resinous composition including a resin as a non-volatile vehicle, and carbon fibrous structures dispersed in the resinous composition, the carbon fibrous structure comprising carbon fibers each having an outside diameter of 15 - 100 nm, wherein the carbon fibrous structure further comprises a granular part with which two or more carbon fibers are tied together in the state that the concerned carbon fibers are externally elongated therefrom, and wherein the granular part is produced at a growth process of the carbon fibers.

The present invention further discloses the coating composition for transparent conductive film in which the carbon fibrous structures are added at an amount in the range of 1 to 25 parts by weight based on 100 parts by weight of the liquid resinous composition.

The present invention further discloses the coating composition for transparent conductive film in which the coating composition is prepared by using a media mill equipped with beads having an average diameter of 0.05 - 1.5 mm to disperse the carbon fibrous structures into the liquid resinous composition.

The present invention further discloses the coating composition for transparent conductive film in which the coating composition is prepared by using a high-shear type distributor in addition to and in advance of the dispersion treatment using the media mill.

EFFECT OF THE INVENTION

According to the present invention, since the carbon fibrous structures to be added as conductivity imparting agent into the matrix resin each have a specific configuration in which some carbon fibers are bound tightly together by a granular part produced at a growth process of the carbon fibers so that the concerned carbon fibers are externally elongated from the granular part, the carbon fibrous structures can disperse promptly into the matrix resin on adding, while they maintain such a bulky structure. Even when they added at a small amount to the matrix, they can be distributed uniformly over the matrix. Therefore, with respect to the electrical conductivity, it is possible to obtain good electric conductive paths throughout the matrix even with a small dosage, and thus to improve the electrical conductivity adequately and controllably. With respect to the transparency of the film, it can be maintained at a high degree, since the carbon fibrous structures can be distributed evenly throughout the matrix.

Further, on preparing the coating composition for the transparent conductive film according to the present invention, using the media mill equipped with the beads of the prescribed mean diameter, it is possible to complete a good and uniform dispersion without any addition of the dispersant such as surfactant. Further, there is no fear of breakdown of the carbon fibrous structure. Therefore, it is able to prepare the transparent conductive film having good properties with ease.

In addition, by subj ecting the mixture of liquid resinous composition and carbon fibrous structures to the dispersion treatment using the high-shear type distributor in advance of the dispersion treatment using the media mill, more particularly homogeneous distribution can be attained, and which can induce an expectation of providing improved properties on the film formulation.

BRIEF DESCRIPTION OF THE DRAWINGS

[Fig. 1] is a transmission electron micrograph (TEM photo) of an intermediate for the carbon fibrous structure which is used for the transparent conductive film according to the present invention;

[Fig. 2A] and [Fig. 2B] are transmission electron micrographs (TEM) of a carbon fibrous structure which is used for the transparent conductive film according to the present invention;

[Fig. 3] is an X-ray diffraction chart of a carbon fibrous structure which is used for the transparent conductive film according to the present invention and an intermediate thereof;

[Fig. 4] is Raman spectra of a carbon fibrous structure which is used for the transparent conductive film according to the present invention and an intermediate thereof;

[Fig. 5] is an optical microphotograph illustrating dispersion condition of the carbon fibrous structures in an embodiment of the transparent conductive film according to the present invention.

BEST MODE FOR CARRYING OUT THE INVENTION

Now, the present invention will be described in detail with reference to some embodiments.

The transparent conductive film according to the present invention is characterized by the fact that it includes and disperses in the matrix resin the carbon fibrous structures each having a unique structural characteristic as mentioned later.

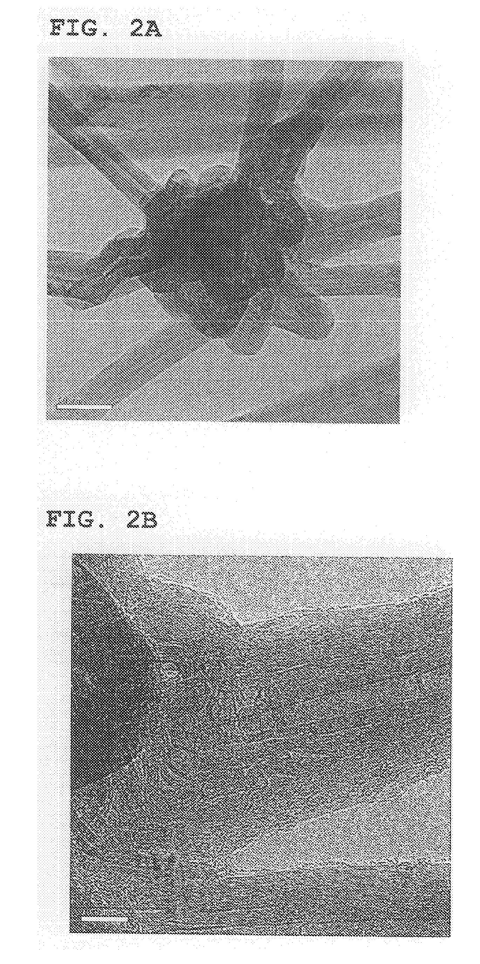

The carbon fibrous structure to be used for the transparent conductive film according to the present invention is, as shown in TEM photos of Fig. 2A and 2B, one which is composed of carbon fibers each having an outside diameter of 15 - 100 nm, and a granular part with which the carbon fibers are tied together so that the concerned carbon fibers are externally elongated from the granular part.

To restrict the outside diameter of the carbon fibers to a range of 15 nm to 100 nm is because when the outside diameter is less than 15 nm, the section of the carbon fiber does not become polygonal figure as mentioned later. According to the physical properties, the smaller the diameter becomes, the more the number for every the unit quantity increases and the longer the length in the axial direction of the carbon fiber elongates, which would be followed by an enhanced electric conductivity. Thus, to have the outside diameter which exceeds 100 nm is not suitable for the carbon fibrous structure to be used as the conductivity imparting agent to the matrix such as resinous material, etc. Particularly, it is more desirable to be in the range of 20 - 70 nm as the outside diameter of the carbon fiber. The one which has a diameter within the preferable range and where tubular graphene sheets are layered one by one in the direction that is orthogonal to the axis, i.e. , being of the multilayer type, can enj oy a high bending stiffness and an ample elasticity, in other words, a property of being easy to restore to the original shape after undergoing any deformation. Therefore, it tends to take a sparse structure in the matrix, even if the carbon fibrous structure has been compressed in advance of mixing to the matrix material such as resin.

Incidentally, the fact that the carbon fiber show polygonal figures as the cross sections would be caused by the annealing at a temperature of not less than 2400 ˚C. Additionally, by this annealing, the spacing between the layered graphene sheets become narrow, and the true density of the carbon fiber can be heightened from 1.89 $g/cm^3$ to 2.1 $g/cm^3$. Therefore, the carbon fiber becomes dense and fewer defects in both the stacking direction and the surface direction of the graphene sheets which compose the carbon fiber, and the flexural rigidity (EI) can be enhanced.

Additionally, it is preferable that the outside diameter of the fine carbon fiber undergoes a change along the axial direction of the fiber. In the case that the outside diameter of the carbon fiber is not fixed in a constant value, but changed along the axial direction of the fiber, it would be expected that a kind of anchor effect is provided to the carbon fiber at the interface with the matrix material such as resin, and thus the migration of the carbon fibrous structure in the matrix can be restrained in order to improve the dispersion stability.

Then, in the carbon fibrous structure according to the present invention, the fine carbon fibers having a predetermined outside diameter and being configured three dimensionally are bound tightly together by a granular part produced at a growth process of the carbon fibers so that the carbon fibers are externally elongated from the granular part. Since multiple carbon fibers are not only entangled each other but fused together at the granular part, the carbon fibers are not disperse as single fibers, but can be dispersed as intact bulky carbon fibrous structures when adding to the matrix such as resin. Since the fine carbon fibers are bound together by a granular part produced at the growth process of the carbon fibers in the carbon fibrous structure according to the present invention, the carbon fibrous structure itself can enjoy superior properties such as electric property. For instance, when determining electrical resistance under a certain pressed density, the carbon fibrous structure according to the present invention can demonstrate an extremely small amount, as compared with that of a simple aggregate of the carbon fibers and that of the carbon fibrous structure inwhich the carbon fibers are fixed at the contacting points with a carbonaceous material or carbonized resultant thereof after the synthesis of the carbon fibers. Thus, when the carbon fibrous material is added and distributed to the matrix, it can construct a good conductive path within the matrix.

Since the granular part is produced in the growth process of the carbon fibers as mentioned above, the carbon - carbon bonds at the granular part are well developed. Further, the granular part appears to include mixed state of sp2- and sp3- bonds, although it is not clear accurately. After the synthesis process (in the "intermediate" or "first intermediate" defined hereinafter ), the granular part and the fibrous parts are continuous mutually because of a structure comprising patch-like sheets of carbon atoms laminated together. Further, after the high temperature treatment, at least a part of graphene layers constituting the granular part is continued on graphene layers constituting the fine carbon fibers elongated outwardly from the granular part, as shown in Figs. 2A and 2B. In the carbon fibrous structure according to the present invention, as symbolized by such a fact that the graphene layers constituting the granular part is continued on the graphene layers constituting the fine carbon fibers, the granular part and the fine carbon fibers are bound together (at least in a part) by carbon crystalline structural bonds. Thus, strong couplings between the granular part and each fine carbon fiber are produced.

With respect to the carbon fibers, the condition of being "extended outwardly" from the granular part used herein means principally that the carbon fibers and granular part are linked together by carbon crystalline structural bonds as mentioned above, but does not means that they are apparently combined together by any additional binding agent (involving carbonaceous ones).

As traces of the fact that the granular part is produced in the growth process of the carbon fibers as mentioned above, the granular part has at least one catalyst particle or void therein, the void being formed due to the volatilization and elimination of the catalyst particle during the heating process after the generation process. The void (or catalyst particle) is essentially independent from hollow parts which are formed in individual fine carbon fibers which are extended outwardly from the granular part (although, a few voids which happened to be associate with the hollow part may be observed) .

Although the number of the catalyst particles or voids is not particularly limited, it may be about 1 - 1000 a granular particle, more preferably, about 3 - 500 a granular particle. When the granular part is formed under the presence of catalyst particles the number of which is within the range mentioned above, the granular part formed can have a desirable size as mentioned later.

The per-unit size of the catalyst particle or void existing in the granular particle may be, for example, 1 - 100 nm, preferably, 2 - 40 nm, and more preferably, 3 - 15 nm.

Furthermore, it is preferable that the diameter of the granular part is larger than the outside diameter of the carbon fibers as shown in Figs. 2A and 2B, although it is not specifically limited thereto. Concretely, for example, the diameter of granular part is 1.3 - 250 times larger than the outside diameter of the carbon fibers, preferably 1.5 - 100 times, and more preferably, 2.0 - 25 times larger, on average. When the granular part which is the binding site of the carbon fibers has an amply large particle diameter, a heightened binding force can be given to the carbon fibers which are externally elongated from the granular part, and thus, even when the carbon fibrous structures are exposed to a relatively high shear stress at the blending to the matrix such as resin, they can be dispersed as intact bulky carbon fibrous structures into the matrix. The "particle diameter of the granular part" used herein is the value which is measured by assuming that the granular part which is the binding site for the constitutive carbon fibers is one spherical particle.

Although the concrete value for the particle diameter of the granular part will be depended on the size of the carbon fibrous structure and the outer diameters of the fine carbon fibers in the carbon fibrous structure, for example, it may be 20 - 5000 nm, more preferably, 25 - 2000 nm, and most preferably, 30 - 500 nm, on average.

Furthermore, the granular part may be roughly globular in shape because the part is produced in the growth process of the carbon fibers as mentioned above. On average, the degree of roundness thereof may lay in the range of from 0.2 to <1, preferably, 0.5 to 0.99, and more preferably, 0.7 to 0.98.

Further, the carbon fibrous structure to be used in the present invention can show a bulky form where the carbon fibers sparsely reside, because the carbon fibrous structure is one comprising carbon fibers are bound together by a granular part so that the carbon fibers are externally elongated from the granular part as mentioned above. Concretely, it is desirable that the bulk density thereof is in the range of 0.0001 - 0. 05 $g/cm^3$, more preferably, 0.001 - 0.02 $g/cm^3$. When the bulk density exceeds to 0.05 $g/cm^3$, the improvement of the physical properties of the matrix resin would become difficult with a small dosage.

Further, the carbon fibrous structure to be used in the present invention can enjoy good electric properties in itself, since the carbon fibers in the structure are bound together by a granular part produced at the growth process of the carbon fibers as mentioned above. For instance, it is desirable that the carbon fibrous structure according to the present invention shows the particle's resistance determined under a certain pressed density (0. 8 $g/cm^3$) of not more than 0. 02 $\Omega \cdot$ cm, more preferably, 0.001 to 0.010 $\Omega \cdot$ cm. If the particle's resistance exceeds to 0.02 $\Omega \cdot$ cm, it may become difficult to form a good conductive path when the structures are added to the matrix resin.

In order to enhance the strength and electric conductivity of the carbon fibrous structure according to the present invention, it is desirable that the graphene sheets which compose the carbon fibers have aminimumnumber of defects, and more specifically, for example, $I_D/I_G$ ratio of the carbon fiber determined by Raman spectroscopy is not more than 0.2, more preferably, not more than 0.1. Incidentally, according to the Raman spectroscopic analysis, with respect to a large single crystal graphite, only the peak (G band) of 1580 $cm^{-1}$ appears. When the crystals are of finite minute sizes or have any lattice defects, the peak (D band) of 1360 $cm^{-1}$ can appear. Therefore, when the strength ratio ($R=I_{1360}/I_{1580}=I_D/I_G$) of the D band and the G band is within the definite value as mentioned above, it is possible to say that there is little defect quantity in graphene sheet.

Further, it is desirable that the carbon fibrous structure has a combustion initiation temperature in air of not less than 750 ˚C, preferably, 800 ˚C - 900 ˚C. Such a high thermal stability would be brought in by the above mentioned facts that it has little defects and that the carbon fibers have a predetermined outside diameter.

It is not limited to, but the carbon fibrous structure of above desirable form may be prepared as follows.

Basically, an organic compound such as a hydrocarbon is thermally decomposed through the CVDprocess in the presence of ultraminute particles of a transition metal as a catalyst in order to obtain a fibrous structure (hereinafter referred to as "intermediate"), and then the intermediate thus obtained undergoes a high temperature heating treatment.

As the raw material organic compound, hydrocarbons such as benzene, toluene, xylene; carbon monoxide (CO); and alcohols such as ethanol may be used. It is preferable, but not limited, to use as carbon sources at least two carbon compounds which have mutually different decomposition temperatures. Incidentally, the words "at least two carbon compound" used herein does not only means using two or more kinds of raw materials, but also means using one kind of raw material which can effect a reaction such as the hydrodealkylation of toluene or xylene within the course of synthesis reaction process of the fibrous structure, and thereafter in the thermal decomposition procedure, which can function as at least two kinds of carbon compounds having mutually different decomposition temperatures.

When as the carbon sources at least two kinds of carbon compounds are provided in the thermal decomposition reaction system, the decomposition temperatures of individual carbon compounds may be varied not only by the kinds of the carbon compounds, but also by the gas partial pressures of individual carbon compounds, or molar ratio between the compounds. Therefore, as the carbon compounds, a relatively large number of combinations can be used by adjusting the composition ratio of two or more carbon compounds in the raw gas.

For example, the carbon fibrous structure to be used in the present invention can be prepared by using two or more carbon compounds in combination, while adjusting the gas partial pressures of the carbon compounds so that each compound performs mutually different decomposition temperature within a selected thermal decomposition reaction temperature range, and/or adjusting the residence time for the carbon compounds in the selected temperature region, wherein the carbon compounds to be selected are selected fromthe group consisting of alkanes or cycloalkanes such as methane, ethane, propanes, butanes, pentanes, hexanes, heptane, cyclopropane, cycrohexane, particularly, alkanes having 1 -7 carbon atoms; alkenes or cycloolefin such as ethylene, propylene, butylenes, pentenes, heptenes, cyclopentene, particularly, alkenes having 1 - 7 carbon atoms; alkynes such as acetylene, propyne, particularly, alkynes having 1 - 7 carbon atoms; aromatic or heteroaromatic hydorocarbons such as benzene, toluene, styrene, xylene, naphthalene, methyl naphtalene, indene, phenanthrene, particularly, aromatic or heteroaromatic hydorocarbons having 6 -18 carbon atoms; alcohols such as methanol, ethanol, particularly, alcohols having 1 -7 carbon atoms; and other carbon compounds involving such as carbon monoxide, ketones, ethers. Further, to optimize the mixing ratio can contribute to the efficiency of the preparation.

When a combination of methane and benzene is utilized among such combinations of two or more carbon compounds, it is desirable that the molar ratio of methane/benzene is >1 - 600, preferably, 1.1 - 200, and more preferably 3 -100. The ratio is for the gas composition ratio at the inlet of the reaction furnace. For instance, when as one of carbon sources toluene is used, in consideration of the matter that 100% of the toluene decomposes into methane and benzene in proportions of 1:1 in the reaction furnace, only a deficiency of methane may be supplied separately. For example, in the case of adjusting the methane / benzene molar ratio to 3, 2 mol methane may be added to 1 mol toluene. As the methane to be added to the toluene, it is possible to use the methane which is contained as an unreacted form in the exhaust gas discharged fromthe reaction furnace, as well as a freshmethane specially supplied.

Using the composition ratio within such a range, it is possible to obtain the carbon fibrous structure in which both the carbon fiber parts and granular parts are efficiently developed.

As the atmosphere gas, inert gases such as argon, helium, xenon; and hydrogen may be used.

As the catalyst, a mixture of transition metal such as iron, cobalt, molybdenum; or transition metal compounds such as ferrocene, metal acetate; and sulfur or a sulfur compound such as thiophene, ferric sulfide; may be used.

The intermediate may be synthesized using the CVD process of hydrocarbon or etc., which has been conventionally used in the art, and the following steps comprising gasifying the mixture of raw material organic compound and the catalyst, supplying the gasified resultant into a reaction furnace along a carrier gas such as hydrogen gas, etc. , and undergoing thermal decomposition at a temperature in the range of 800 ˚C - 1300 ˚C. By such synthesis procedure, the obtained is an aggregate which is of several to several tens of centimeters in size and which is composed of plural carbon fibrous structures (intermediates) each of which show a three dimensional configuration where fibers having 15 - 100 nm in outside diameter are bound mutually by a granule which has been grown up around the catalyst particle as the nucleus.

The thermal decomposition reaction of the hydrocarbon as the raw material is mainly produced on the surface of the catalyst particle or a growing surface of a granule which is grown around the catalyst particle as a nucleus, and the fibrous growth of carbon may be achieved when the recrystallization of the carbons created by the decomposition will progress in a constant direction. When obtaining the carbon fibrous structure according to the present invention, however, the balance between the decomposition rate and the growing rate is forced to be varied intentionally. Namely, for instance, as mentioned above, to use as carbon sources at least two kinds of carbon compounds having mutually different decomposition temperatures may allow the carboneous material to grow three dimensionally around the particle as a centre, rather than in one dimensional direction. The three dimensional growth of the carbon fibers does not depend only on the balance between the decomposition rate and the growing rate, but also on the crystal face' s selectivity of the catalyst particle, residence time within the reaction furnace, temperature distribution in the furnace, etc. , and the balance between the decomposition rate and the growing rate is not affected only by the kind of the carbon source as mentioned above, but also by the reaction temperature, and gas temperature, etc. In a general way, when the growing rate is larger than the decomposition rate, the carbon material tends to grow in fibrous, whereas when the decomposition rate is larger than the growing rate, the carbon material tends to grow in the peripheral direction of the catalyst particle. Accordingly, changing the balance between the decomposition rate and the growing rate intentionally, it is possible to control the growth of the carbon material to create in a multi-direction rather than in a certain single direction, and to produce the three dimensional structure according to the present invention. In order to form the above mentioned three dimensional configuration where the fibers are bound mutually by a granule with ease, it is desirable to optimize the compositions such as the catalyst, the residence time in the reaction furnace, the reaction temperature, the gas temperature, and etc.

With respect to the method for preparing the carbon fibrous structure to be used in the present invention with efficiency, as another approach to the aforementioned one that two or more carbon compounds which have mutually different decomposition temperature are used in an appropriate mixing ratio, there is an approach that the raw material gas supplied into the reaction furnace from a supply port is forced to form a turbulent flow in proximity to the supply port. The "turbulent flow" used hereinmeans a furiously irregular flow, such as flow with vortexes.

In the reaction furnace, immediately after the raw material gas is supplied into the reaction furnace from the supply port, metal catalyst fine particles are produced by the decomposition of the transition metal compound as the catalyst involved in the raw material gas. The production of the fine particles is carried out through the following steps. Namely, at first, the transition metal compound is decomposed to make metal atoms, then, plural number of, for example, about one hundred of metal atoms come into collisions with each other to create a cluster. At the created cluster state, it can not function as a catalyst for the fine carbon fiber. Then, the clusters further are aggregated by collisions with each other to grow into a metal crystalline particle of about 3 - 10 nm in size, and which particle comes into use as the metal catalyst fine particle for producing the fine carbon fiber.

During the catalyst formation process as mentioned above, if the vortex flows belonging to the furiously turbulent flow are present, it is possible that the collisions of metal atoms or collisions of clusters become more vigorously as compared with the collisions only due to the Brownian movement of atoms or collisions, and thus the collision frequency per unit time is enhanced so that the metal catalyst fine particles are produced within a shorter time and with higher efficiency. Further, since concentration, temperature, etc. are homogenized by the force of vortex flow, the obtained metal catalyst fine particles become uniform in size. Additionally, during the process of producingmetal catalyst fine particles, a metal catalyst particles' aggregate in which numerous metal crystalline particles was aggregated by vigorous collisions with the force of vortex flows can be also formed. Since the metal catalyst particles are rapidly produced as mentioned above, the decomposition of carbon compound can be accelerated so that an ample amount of carbonaceous material can be provided. Whereby, the fine carbon fibers grow up in a radial pattern by taking individual metal catalyst particles in the aggregate as nuclei. When the thermal decomposition rate of a part of carbon compounds is faster than the growing rate of the carbon material as previously described, the carbon material may also grow in the circumferential direction so as to form the granular part around the aggregate, and thus the carbon fiber structure of the desired three dimensional configuration may be obtained with efficiency. Incidentally, it may be also considered that there is a possibility that some of the metal catalyst fine particles in the aggregate are ones that have a lower activity than the other particles or ones that are deactivated on the reaction. If non-fibrous or very short fibrous carbon material layers grown by such catalyst fine particles before or after the catalyst fine particles aggregate are present at the circumferential area of the aggregate, the granular part of the carbon fiber structure to be used in the present invention may be formed.

The concrete means for creating the turbulence to the raw material gas flow near the supply port for the raw material gas is not particularly limited. For example, it is adaptable to provide some type of collision member at a position where the raw material gas flow introduced from the supply port can be interfered by the collision section. The shape of the collision section is not particularly limited, as far as an adequate turbulent flow can be formed in the reaction furnace by the vortex flow which is created at the collision section as the startingpoint. For example, embodiments where various shapes of baffles, paddles, tapered tubes, umbrella shaped elements, etc., are used singly or in varying combinations and located at one or more positions may be adaptable.

The intermediate, obtained by heating the mixed gas of the catalyst and hydrocarbon at a constant temperature in the range of 800 ˚C - 1300˚C, takes the structure which is made just as some patch like sheets of carbon atoms are laminated together, (and being still in half-raw, or incomplete condition), and when analyzing it with Raman spectroscopy, the D band thereof is very large and many defects are observed. Further, the obtained intermediate involves unreacted raw materials, nonfibrous carbide, tar moiety and catalyst metal.

Therefore, the intermediate is subjected to a high temperature heat treatment at 2400 - 3000 ˚C using a proper method, in order to remove such residues fromthe intermediate, and produce the intended carbon fibrous structure with few defects.

Namely, for instance, the intermediate is heated at 800 - 1200 ˚C to remove the unreacted raw material and volatile flux such as the tar moiety, and thereafter annealed at a high temperature of 2400 - 3000 ˚C to prepare the intended structure, and concurrently, to vaporize the catalyst metal which has been involved in the fiber in order to remove it away from the fiber. In this process, it is possible to add a reducing gas and carbon monoxide gas of a small amount into the inert gas atmosphere to protect material structure.

By annealing the intermediate at a temperature of 2400 - 3000 ˚C, the patch like sheets of carbon atoms are rearranged so as to associate mutually and then form multiple graphene sheet-like layers.

After or before such a high temperature heat treatment, the aggregates may undergo crushing in order to obtain carbon fibrous structures each having an area based circle-equivalent mean diameter of several of centimeters, and then the obtained carbon fibrous structures may undergo pulverizing in order to obtain the carbon fibrous structures having the predetermined area based circle-equivalent mean diameter of 50 - 100 $\mu$m. To perform the pulverizing directly without crushing may be also permissibly. Contrary, the aggregates each of which involves plural carbon fibrous structures according to the present invention may undergo size enlargement for adjusting shape, size, or bulk density to ones suitable for using. More preferably, in order to utilize effectively the above structure which is formed on the reaction, the annealing would be performed in the state that the bulk density is in low (the state that the fibers are extended as much as they can and the voidage is amply large), which may contribute to the improved electric conductivity of matrix resin.

Next, as the resin to be used for the matrix of the transparent conductive film according to this invention, any of various thermoplastic resins and thermosetting resins, as well as other natural resins or modified resins therefrom may be adaptable nonrestrictively. Among them, a resin of thermosetting type may be desirable from the point of readily film coating.

The mixing amount of the carbon fibrous structures into the resin with respect to the transparent conductive film according to the present invention is not particularly limited. For satisfactory transparency and conductivity, however, it is preferable in general that the carbon fibrous structures are added and dispersed into the resin at an amount of 1 - 25 parts by weight based on 100 parts by weight of resin. The transparent conductive film that has such mixing amount as above mentioned would be able to perform a surface resistivity of not more than $1.0 \times 10^{12}$ $\Omega/\square$, and a total light transmittance of not less than 30%, when the transparent conductive film is formed at a thickness of 0.1 - 5 $\mu$m on a glass substrate. In addition, the haze of the transparent conductive film would become not more than 30%.

In a particular use such as transparent electrode material, it is more preferable that the carbon fibrous structures are added and dispersed into the resin at an amount of 10 - 25 parts by weight based on 100 parts by weight of resin. In this case, it is expected to obtain a surface resistivity of $10^1 - 10^4$ $\Omega/\square$, and a total light transmittance of not less than 50%. In another particular use such as static electricity removing window parts, it is more preferable that the carbon fibrous structures are added and dispersed into the resin at an amount of 1 - 10 parts by weight based on 100 parts by weight of resin. In this case, it is expected to obtain a surface resistivity of $10^4 - 10^{12}$ $\Omega/\square$, and a total light transmittance of not less than 30%.

The coating composition for preparing the above mentioned transparent conductive film according to the present invention will be described below.

The coating composition according to the present invention comprises a liquid resinous composition including a resin as a non-volatile vehicle, and carbon fibrous structures each having above mentioned specific structure and which are dispersed in the liquid resinous composition.

The carbon fibrous structures using in this coating composition are the same ones as described above in detail.

The liquid resinous composition to be used in this invention may involve various types' liquid resinous compositions, such as water- or oil- based coating composition, ink composition, as well as other various coating compositions, in which a resin as a non-volatile vehicle is solved in a solvent or dispersed into a dispersant. As the resin ingredient, various organic compounds capable of forming a film such as thermoplastic resins, thermosetting resins, as well as natural resins and modified resins thereof are usable. For example, acrylic type resins such as aqueous acrylic, acrylic lacquer; ester type resins such as alkyd resins, various modified alkyd resins, unsaturated polyesters; melamin type resins; urethane type resins; epoxy type resins, and other resins such as polyvinyl chloride, polyvinyl acetate, polyvinyl alcohol, polystyrene, polyamide, phenol resin, furan resin, xylene formaldehyde resin, urea resin, etc., can be concretely exemplified, but it should be noted that they are not restrictive ones. Then, depending upon the kind of the resin ingredient to be used, the liquid resinous composition can be taken a varied type such as baking type, cold setting type, etc.

The liquid which is used as solvent or dispersion medium in the liquid resin composition is also not particularly limited, and is able to be selected properly in accordance with the kind of the resin ingredient to be used. For example, as the liquid, water; alcohols such as methyl alcohol, ethyl alcohol, isopropyl alcohol, butyl alcohols, allyl alcohols; glycols or their derivatives such as ethylene glycol, propylene glycol, diethylene glycol, polyethylene glycols, polypropylene glycols, diethylene glycol monoethyl ether, polypropylene glycol monoethyl ethers, polyethylene glycol monoallyl ethers, polypropylene glycol monoallyl ethers; glycerol or its derivatives such as glycerol, glycerol monoethyl ether, glycerol monoallyl ether; amides such as N-methyl pyrrolidone; ethers such as tetrahydorofuran, dioxane; ketones such as methyl ethyl ketone, methyl isobutyl ketone; hydrocarbons such as liquid paraffins, decane, decenes, methyl naphthalenes, decalin, kerosene, diphenyl methane, toluene, dimethylbenzenes, ethylbenzenes, diethyl benzenes, propyl benzenes, cyclohexane, partially hydrogenated triphenyl; silicone oils such as polydimethyl siloxanes, partially octyl-substituted polydimethyl siloxanes, partially phenyl-substituted polydimethyl siloxanes, fluorosilicone oils; halogenated hydrocarbons such as chlorobenzenes, dichlorobenzenes, bromobenzenes, chlorodiphenyls, chlorodiphenyl methanes; fluorides; and ester compounds such as ethyl benzoate, octyl benzoate, dioctyl phthalate, trioctyl trimellitate, dibutyl sebacate, ethyl (meth)acrylate, butyl (meth)acrylate, dodecyl (meth)acrylate, etc., are able to be exemplified.

In the coating composition according to the present invention, the mixing amount of the above mentioned carbon fibrous structures to the resin composition is not particularly limited, and it may be determined properly in view of any requirement, for example, a demand from electrical characteristic to be necessitated by the transparent conductive film. For instance, 1 - 25 parts by weight of the carbon fibrous structures may be added to 100 parts by weight of the resin composition. As for any amount within the above additive range, it is possible to prepare the composition in which the carbon fibrous structures are uniformly distributed.

Incidentally, the coating composition according to the present invention may include various known additives, such as, coloring agents involving pigments and dyes, various kinds of stabilizers, antioxidants, ultraviolet absorbers, flame retardants, and solvents, as far as the purpose of the present invention can be effected.

The coating composition for the transparent conductive film according to the present invention can be prepared as a highly dispersed system since the carbon fibrous structures to be used each have the sparse structure individually and thus can bring a good dispersibility. More preferably, it is desired that the coating composition is prepared by using a media mill, especially, a media mill equipped with beads having a mean diameter of 0.05 - 1.5 mm, in order to disperse the carbon fibrous structures throughout the composition. Specifically, in advance of the dispersion treatment using such a media mill, to subject the mixture to a dispersion treatment using a high-shear type distributor as in detail explained below can bring a great advantage.

When the particle diameter of beads to be use for the media mill is too small, the fear arisen is that the carbon fibrous structures are broken into more minute pieces, and another is that dispersion of the carbon fibrous structures in the composition is not amply progressed because the kinetic energy of the beads becomes small. Further, the handling of the beads becomes difficult. Therefore, it is desired that the average diameter of the beads is not less than 0.05 mm, preferably not less than 0.5 mm. On the other hand, when the particle diameter of beads to be use is too large, the fear arisen is that the inadequate milling is applied to the carbon fibrous structures because the number of beads per a unit volume is decreased with increasing diameter and thus the dispersion efficiency is reduced. As a result, there is a possibility that the carbon fibrous structures exists in the composition as they have a large aspect ratio, and the liquidity for the paint or coating agent can not be expected. Therefore, it is desired that the average diameter of the beads is not more than 1.5 mm, preferably not more than 1.0 mm.

The material of the beads as the dispersing media which is used for the media mill is not specifically limited. For example, alumina, zirconia, steel, chrome steel, glass, and etc., can be illustrated. Among them, zirconia beads are preferable, when considering the existence of the impurities in the product and also the magnitude of the kinetic energy depending upon the specific gravity of the material.

The shape of the beads is not specifically limited, but, in general, globular or sphere beads are used.

The type of the media mill to be used is not specifically limited, and any known media mill can be applied. Concretely, for example, various known ATWRITERs, sand mills, ball mills, etc., can be used.

Incidentally, the filling rate of the beads into the vessel of the mill may be determined in accordance with the configuration, volume, etc. of the vessel and stirrer, and is not specifically limited. When it is too low, however, there is a fear that the mill can not give to the carbon fibrous structures a milling or cutting force of adequate level. On the other hand, when it is too high, there is a fear that the driving force for rotating the mill becomes extremely high. Further, because of increment of the beads' abrasion, there is a fear that the contamination in the composition to be treated becomes worse. For instance, therefore, it is desirable that the filling rate of the beads is set at 70 - 85 % of the effective volume of the vessel.

The operation conditions such as processing time, axis rotation number, internal pressure in the vessel, motor load, etc., may be varied by the mixing amount of the carbon fibrous structures, the characteristics of the resin to which the carbon fibrous structures are dispersed, particularly, the viscosity and the compatibility to the carbon fibrous structure, and thus, the conditions would be set appropriately according to the purpose.

As the high - shear type distributor which is used in advance of the dispersion treatment using such a media mill, a preferable example is a mixer which includes a stirring wheel capable of high speed rotating, and a vessel of which the inner peripheral surface is set so as to be closely adjacent to the outer peripheral surface of the stirring wheel, and on the operation, the wheel being rotated at a tip speed of not less than 30 m/sec. in order to force the liquid to be treated to be pressed as a thin film against the inner peripheral surface of the vessel by means of the centrifugal force of the wheel while the liquid being in rotation, and to allow the thin film of the liquid to contact with the tips of the wheel so as to perform the stirring of the liquid. Other in-line rotor and stator type mixers are also able to be used preferably. As a concrete example the desirable high-shear type distributor, T.K. FILMICS® (manufactured by TOKUSHI KIKA KOGYO CO., LTD) may be cited.

Alternatively, any one of other high-shear type distributors such as T.K LABO DISPER, T.K. PIPELINE MIXER, T.K. HOMOMIC LINE MILL®, T.K. HOMO JETTOR, T.K. UNI-MIXER, T.K. HOMOMIC LINE FLOW®, T.K. AGI HOMO DISPER (manufactured by TOKUSHI KIKA KOGYO Co., Ltd.), homogenizer POLYTRON® (manufactured by KINEMATICA AG), homogenizer Physcotron (manufactured by Microtec Co., Ltd.), BIOMIXER (manufactured by Nippon Seiki Co., Ltd.), turbo type stirring machine (manufactured by KODAIRA SEISAKUSHO Co., Ltd.), ULTRA DISPER (ASADA IRON WORKS.Co., Ltd.), EBARA MILDER (manufactured by Ebara Corporation) may be used.

EXAMPLES

Hereinafter, this invention will be illustrated in detail by practical examples. However, the invention is not limited to the following examples.
The respective physical properties illustrated later are measured by the following protocols.

<Measurement of Bulk density>

1g of powder was added into a transparent circular cylinder which was of 70 mm caliber and equipped with a distribution plate, then air at 0.1 Mpa of pressure, and 1.3 liter in capacity was supplied from the lower side of the distribution plate in order to blow off the powder and thereafter allowed the powder to settle naturally. After the fifth air blowing, the height of the settled powder layer was measured. As the measuring points, any 6 points were adopted, and the average of the 6 points' data was calculated in order to determine the bulk density.

<Raman spectroscopic analysis>

The Raman spectroscopic analysis was performed with the equipment LabRam 800 which was manufactured by HORIBA JOBIN YVON, S.A.S., and using 514 nm light of the argon laser.

<TG combustion temperature>

Combustion behavior was determined using TG-DTA manufactured by MAX SCIENCE CO. LTD., at air flow rate of 0.1 liter/minute and heating rate of 10 ˚C/minute. When burning, TG indicates a quantity reduction and DTA indicates an exothermic peak. Thus, the top position of the exothermic peak was defined as the combustion initiation temperature.

<X ray diffraction>

Using the powder X ray diffraction equipment (JDX3532, manufactured by JEOL Ltd.), carbon fibers after annealing processing were determined. $K\alpha$ ray which was generated with Cu tube at 40 kV, 30 mV was used, and the measurement of the spacing was performed in accordance with the method defined by The Japan Society for the Promotion of Science (JSPS), described in "Latest Experimental Technique For Carbon Materials (Analysis Part)", Edited by Carbon Society of Japan, 2001), and as the internal standard silicon powder was used. The related parts of this literature are incorporated herein by reference.

<Particle's resistance and decompressibility>

1 g of CNT powder was scaled, and then press-loaded into a resinous die (inner dimensions: 40 liters, 10W, 80 Hmm), and the displacement and load were read out. A constant current was applied to the powder by the four-terminal method, and in this condition the voltage was measured. Aftermeasuring the voltage until the density come to $0.9g/cm^3$, the applied pressure was released and the density after decompression was measured. As the particle's resistance, ones measured when the powder was compressed to 0.5, 0.8 or 0.9 $g/cm^3$ were adopted.

<Mean diameter and roundness of the granular part, and ratio of the granular part to the fine carbon fiber>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.
On the carbon fibrous structures to be measured, assuming each individual granular part which is the binding point of carbon fibers to be a particle, contours of the individual granular parts were traced using the image analysis software, WinRoof™ (trade name, marketed by Mitani Corp.), and area within each individual contour was measured, circle-equivalent mean diameter of each individual granular part was calculated, and then, the calculated data were averaged to determine the area based circle-equivalent mean diameter. Roundness (R) was determined by inputting value of the area(A) within each individual contour computed by the above and a measured value of each individual contour's length (L) to the following equation to calculate the roundness of each individual granular part, and then, averaging the calculated data.

$$R = A * 4\pi / L^2$$

Further, the outer diameter of the fine carbon fibers in the individual carbon fibrous structures to be measured were determined, and then, from the outer diameter determined and the circle-equivalent mean diameter of the granular part calculated as above, the ratio of circle-equivalent mean diameter to the outer diameter of the fine carbon fiber was calculated for each individual carbon fibrous structure, and then the data obtained are averaged.

<Coating ability>

According to the following criteria, this property was determined.

  ○: It is easy to coat by a bar coater.
  ×: It is difficult to coat by a bar coater.

<Total light transmittance>

Total light transmittance was determined in accordance with JIS K 7361, by using haze/transmittance meter HM-150 (manufactured by MURAKAMI COLOR RESEARCH LABORATORY), for a coating film having a prescribed thickness formed on a glass plate (total light transmittance of 91.0%, 50 x 50 x 2 mm) .

<Surface resistivity>

50 x 50 mm of coated harden film was prepared on a glass plate. Using 4-pin probe type resistivity meters (MCP-T600, MCP-HT4500, both manufactured by Mitsubishi Chemical), the resistance ($\Omega$) at nine points of the coated film surface was measured, then the measured values are converted into those of volume resistivity ($\Omega$·cm) by the resistivity meters, and then average was calculated.

Synthetic Example 1

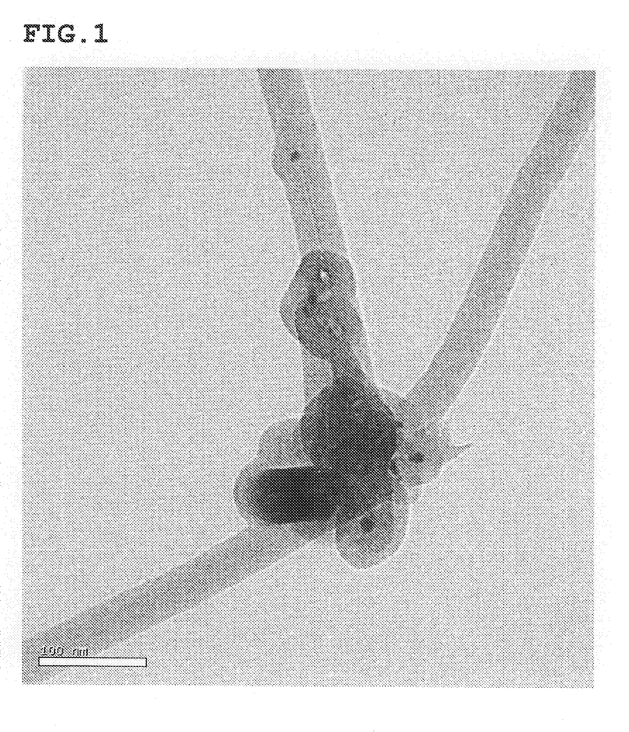

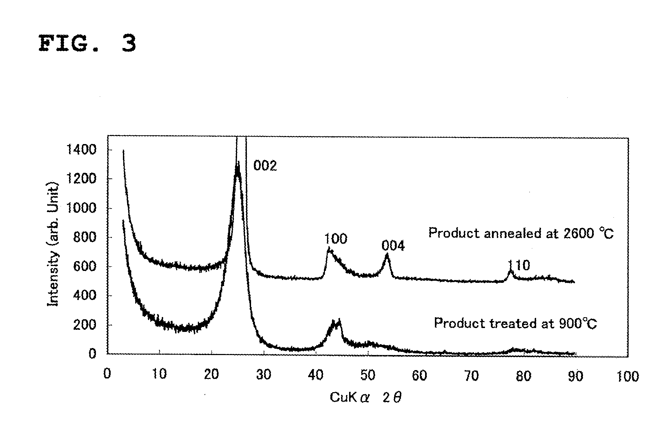

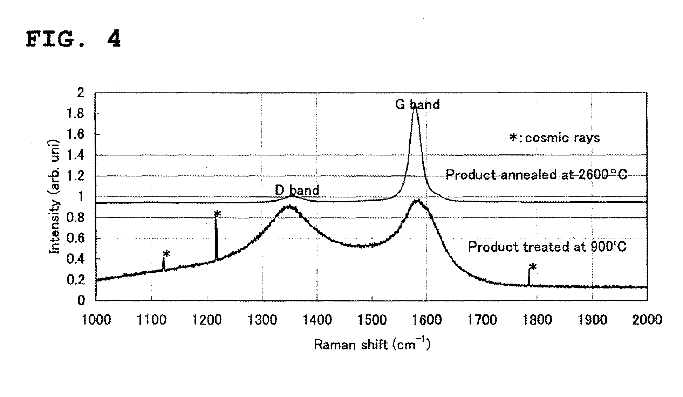

By the CVD process, carbon fibrous structures were synthesized from toluene as the raw material.
The synthesis was carried out in the presence of a mixture of ferrocene and thiophene as the catalyst, and under the reducing atmosphere of hydrogen gas. Toluene and the catalyst were heated to 380 ˚C along with the hydrogen gas, and then they were supplied to the generation furnace, and underwent thermal decomposition at 1250 ˚C in order to obtain the carbon fibrous structures (first intermediate). The synthesized first intermediate was baked at 900 ˚C in nitrogen gas in order to remove hydrocarbons such as tar and obtain a second intermediate. The R value of the second intermediate measured by the Raman spectroscopic analysis was found as 0 . 98 . Sample for electron microscope was prepared by dispersing the first intermediate into toluene. Fig. 1 shows TEM photo of the sample.
Further, the second intermediate underwent a high temperature heating treatment at 2600 ˚C. The obtained aggregates of the carbon fibrous structures underwent pulverization using an air flow pulverizer in order to produce the carbon fibrous structures according to the present invention.
Sample for electron microscopes was prepared by dispersing ultrasonically the obtained carbon fibrous structures into toluene. Figs 2A and 2B show TEM photos of the sample.
Further, the X-ray diffraction analysis and Raman spectroscopic analysis were performed on the carbon fibrous structure before and after the high temperature heating treatment in order to examine changes in these analyses. The results are shown in Figs. 3 and 4, respectively.
Additionally, it was found that the carbon fibrous structure had bulk density of 0.0032 g/cm$^3$, Raman $I_D/I_G$ ratio of 0.090, TG combustion temperature of 786 ˚C, spacing of 3.383 Å, particle's resistance of 0.0083 $\Omega$· cm, and density after decompression of 0.25 g/cm$^3$.

The mean diameter of the granular parts in the carbon fibrous structures was determined as 443 nm (SD 207 nm), that is 7.38 times larger than the outer diameter of the carbon fibers in the carbon fibrous structure. The mean roundness of the granular parts was 0.67 (SD 0.14).

Examples 1 - 9

To 100 parts by weight of polyurethane resin solution (non-volatile matter: 20%), the carbon fibrous structures obtained in Synthetic Example 1 was added at the ratio as shown in Table 1, and then the resultant mixture was treated for pulverization and dispersion by using a bead mill (DYNO-MILL, manufactured by SHINMARU ENTERPRISES CORPORATION) under the conditions of zirconia beads (0.05mm, 0. 5mm, 1.0mm, or 1.5mm in diameter), peripheral speed of 10 m/sec, the beads filling rate of 80% by volume, and the processing time of 2 hrs. As a result, the coating composition where the carbon fibrous structures were dispersed was prepared.

The liquid resinous composition thus obtained was developed on a glass plate in order to obtain a hardened film of a prescribed thickness shown in Table 1. The hardened film was tested for coating ability, total light transmittance, and surface resistivity. The results obtained were shown in Table 1.

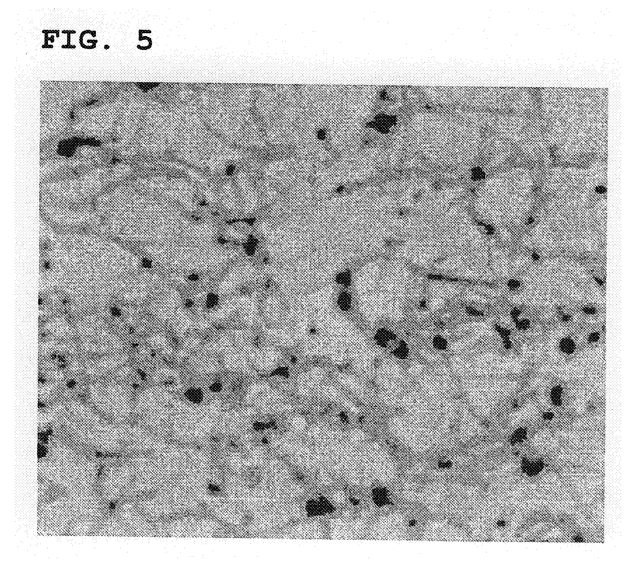

Further, the dispersion condition of the carbon fibrous structures in the hardened coating film obtained in Example 6 was observed by an electron microscope. The result obtained was shown in Fig. 5.

Referential Examples 1 - 6

The same procedure in Examples 1 - 9 was repeated except that the dispersion method and its condition were changed as shown in Table 1, in order to prepare the coating compositions of Referential Examples 1 - 6. Then, the same tests for coating ability, total light transmittance, and surface resistivity as in Examples 1 - 9 were performed. The results obtained were shown in Table 1.

Controls 1 -4

To 100 parts by weight of polyurethane resin solution (non-volatile matter: 20%), multilayered carbon nanotubes (manufactured by Tsinghua Nafine, 10 - 20 nm in outer diameter, several $\mu$m to several tens $\mu$m in length) was added at the ratio as shown in Table 1, and then the resultant mixture was treated for pulverization and dispersion by using a bead mill (DYNO-MILL, manufactured by SHINMARU ENTERPRISES CORPORATION) under the conditions of zirconia beads (0.05mm, or 1.5mm in diameter), peripheral speed of 10 m/sec, the beads filling rate of 80% by volume, and the processing time of 2 hrs. As a result, the coating composition where the carbon fibers were dispersed was prepared.

The liquid resinous composition thus obtained was developed on a glass plate in order to obtain a hardened film of a prescribed thickness shown in Table 1. The hardened film was tested for coating ability, total light transmittance, and surface resistivity. The results obtained were shown in Table 1.

Examples 10 - 18

To 100 parts by weight of polyester resin solution (non-volatile matter: 65%), the carbon fibrous structures obtained in Synthetic Example 1 was added at the ratio as shown in Table 2, and then the resultant mixture was treated for pulverization and dispersion by using a bead mill (DYNO-MILL, manufactured by SHINMARU ENTERPRISES CORPORATION) under the conditions of zirconia beads (0.05mm, 0. 5mm, 1.0mm, or 1.5mm in diameter), peripheral speed of 10 m/sec, the beads filling rate of 80% by volume, and the processing time of 2 hrs. As a result, the coating composition where the carbon fibrous structures were dispersed was prepared.

The liquid resinous composition thus obtained was developed on a glass plate in order to obtain a hardened film of a prescribed thickness shown in Table 2. The hardened film was tested for coating ability, total light transmittance, and surface resistivity. The results obtained were shown in Table 2.

Referential Examples 7 - 12

The same procedure in Examples 10 - 18 was repeated except that the dispersion method and its condition were changed as shown in Table 2, in order to prepare the coating compositions of Referential Examples 7 - 12. Then, the same tests for coating ability, total light transmittance, and surface resistivity as in Examples 10 - 18 were performed. The results obtained were shown in Table 2.

Controls 5 - 8

To 100 parts by weight of polyester resin solution (non-volatile matter: 65%), multilayered carbon nanotubes (manufactured by Tsinghua Nafine, 10 - 20 nm in outer diameter, several $\mu$m to several tens $\mu$m in length) was added at the ratio as shown in Table 2, and then the resultant mixture was treated for pulverization and dispersion by using a bead mill (DYNO-MILL, manufactured by SHINMARU ENTERPRISES CORPORATION) under the conditions of zirconia beads (0.05mm, or 1. 5mm in diameter), peripheral speed of 10 m/sec, the beads filling rate of 80% by volume, and the processing time of 2 hrs. As a result, the coating composition where the carbon fibers were dispersed was prepared. The liquid resinous composition thus obtained was developed on a glass plate in order to obtain a hardened film of a prescribed thickness shown in Table 2. The hardened film was tested for coating ability, total light transmittance, and surface resistivity. The results obtained were shown in Table 2.

Examples 19 - 27

To 100 parts by weight of phenolic resin (non-volatile matter: 50%), the carbon fibrous structures obtained in Synthetic Example 1 was added at the ratio as shown in Table 3, and then the resultant mixture was treated for pulverization and dispersion by using a bead mill (DYNO-MILL, manufactured by SHINMARU ENTERPRISES CORPORATION) under the conditions of zirconia beads (0.05mm, 0.5mm, 1.0mm, or 1.5mm in diameter), peripheral speed of 10 m/sec, the beads filling rate of 80% by volume, and the processing time of 2 hrs. As a result, the coating composition where the carbon fibrous structures were dispersed was prepared.
The liquid resinous composition thus obtained was developed on a glass plate in order to obtain a hardened film of a prescribed thickness shown in Table 3. The hardened film was tested for coating ability, total light transmittance, and surface resistivity. The results obtained were shown in Table 3.

Referential Examples 13 - 18

The same procedure in Examples 19 - 27 was repeated except that the dispersion method and its condition were changed as shown in Table 3, in order to prepare the coating compositions of Referential Examples 13 - 18. Then, the same tests for coating ability, total light transmittance, and surface resistivity as in Examples 19 - 27 were performed. The results obtained were shown in Table 3.

Controls 9 -12

To 100 parts by weight of phenolic resin (non-volatile matter: 50%), multilayered carbon nanotubes (manufactured by Tsinghua Nafine, 10 - 20 nm in outer diameter, several $\mu$m to several tens $\mu$m in length) was added at the ratio as shown in Table 3, and then the resultant mixture was treated for pulverization and dispersion by using a bead mill (DYNO-MILL, manufactured by SHINMARU ENTERPRISES CORPORATION) under the conditions of zirconia beads (0.05mm, or 1.5mm in diameter), peripheral speed of 10 m/sec, the beads filling rate of 80% by volume, and the processing time of 2 hrs. As a result, the coating composition where the carbon fibers were dispersed was prepared.
The liquid resinous composition thus obtained was developed on a glass plate in order to obtain a hardened film of a prescribed thickness shown in Table 3. The hardened film was tested for coating ability, total light transmittance, and surface resistivity. The results obtained were shown in Table 3.

Examples 28 - 36

To 100 parts by weight of acrylic resin (non-volatile matter: 35%), the carbon fibrous structures obtained in Synthetic Example 1 was added at the ratio as shown in Table 4, and then the resultant mixture was treated for pulverization and dispersion by using a bead mill (DYNO-MILL, manufactured by SHINMARU ENTERPRISES CORPORATION) under the conditions of zirconia beads (0.05mm, 0.5mm, 1.0mm, or 1. 5mm in diameter), peripheral speed of 10 m/sec, the beads filling rate of 80% by volume, and the processing time of 2 hrs. As a result, the coating composition where the carbon fibrous structures were dispersed was prepared.
The liquid resinous composition thus obtained was developed on a glass plate in order to obtain a hardened film of a prescribed thickness shown in Table 4. The hardened film was tested for coating ability, total light transmittance, and surface resistivity. The results obtained were shown in Table 4.

Referential Examples 19 - 24

The same procedure in Examples 28 - 36 was repeated except that the dispersion method and its condition were changed as shown in Table 4, in order to prepare the coating compositions of Referential Examples 19 - 24. Then, the same tests for coating ability, total light transmittance, and surface resistivity as in Examples 28 - 36 were performed. The results obtained were shown in Table 4.

Controls 13 -16

To 100 parts by weight of acrylic resin (non-volatile matter: 35%), multilayered carbon nanotubes (manufactured by Tsinghua Nafine, 10 - 20 nm in outer diameter, several $\mu$m to several tens $\mu$m in length) was added at the ratio as shown in Table 4, and then the resultant mixture was treated for pulverization and dispersion by using a bead mill (DYNO-MILL, manufactured by SHINMARU ENTERPRISES CORPORATION) under the conditions of zirconia beads (0.05mm, or 1.5mm in diameter), peripheral speed of 10 m/sec, the beads filling rate of 80% by volume, and the processing time of 2 hrs. As a result, the coating composition where the carbon fibers were dispersed was prepared.
The liquid resinous composition thus obtained was developed on a glass plate in order to obtain a hardened film of a prescribed thickness shown in Table 4. The hardened film was tested for coating ability, total light transmittance, and surface resistivity. The results obtained were shown in Table 4.

Examples 37-40

The same procedures in Examples 6, 15, 24, and 33 were repeated except that an additional dispersion treatment of using T. K. FILMICS® (manufactured by TOKUSHI KIKA KOGYO CO. , LTD) at the tip speed of 50 m/sec for 2 minutes was performed in advance of the dispersion treatment of using the bead mill.
As a result, the coating composition where the carbon fibers were dispersed was prepared.
The liquid resinous composition thus obtained was developed on a glass plate in order to obtain a hardened film of a prescribed thickness shown in Tables 1 - 4. The hardened film was tested for coating ability, total light transmittance, and surface resistivity. The results obtained were shown in Tables 1 - 4.
| | Example | | | | | | | | | | Referential | | | | | | Control | | | |
|---|---|---|---|---|---|---|---|---|---|---|---|---|---|---|---|---|---|---|---|---|
| | 1 | 2 | 3 | 4 | 5 | 6 | 7 | 8 | 9 | 37 | 1 | 2 | 3 | 4 | 5 | 6 | 1 | 2 | 3 | 4 |
| Polyurethane | 100 | 100 | 100 | 100 | 100 | 100 | 100 | 100 | 100 | 100 | 100 | 100 | 100 | 100 | 100 | 100 | 100 | 100 | 100 | 100 |
| Carbon fibrous structures | 5 | 1.5 | 2 | 2 | 5 | 5 | 25 | 25 | 25 | 5 | 1.5 | 0.5 | 35 | 5 | 5 | 5 | | | | |
| Multilayered CNT | | | | | | | | | | | | | | | | | 1.5 | 1.5 | 5 | 5 |
| Method — Bead mill dispersion | O | O | O | O | O | O | O | O | O | | O | O | O | O | | | O | O | O | O |
| Method — Ball mill dispersion | | | | | | | | | | | | | | | O | | | | | |
| Method — Homogenizer dispersion | | | | | | | | | | | | | | | | O | | | | |
| Method — Pretreatment (high-shear type dispersion) | | | | | | | | | | O | | | | | | | | | | |
| Beads' diameter (mm) | 1.0 | 0.05 | 0.05 | 1.5 | 0.5 | 1.0 | 0.5 | 1.0 | 1.5 | 1.0 | 0.03 | 0.05 | 0.05 | 2.0 | 0.5 | 0.5 | 0.05 | 1.5 | 0.05 | 1.5 |
| Thickness (μm) | 0.2 | 1.0 | 1.0 | 3.0 | 0.5 | 1.5 | 1.0 | 1.0 | 4.5 | 1.5 | 1.0 | 1.0 | 1.0 | 1.0 | 1.0 | 1.0 | 1.0 | 1.0 | 1.0 | 1.0 |
| Coating ability | O | O | O | O | O | O | O | O | O | O | O | O | X | O | O | O | O | O | O | O |
| Total light transmittance | 88.5 | 90.2 | 87.5 | 77.3 | 83.5 | 70.5 | 52.5 | 52.8 | 33.8 | 78.4 | 89.4 | 90.5 | ND | ND | ND | ND | 22.3 | 17.5 | ND | ND |
| Surface resistivity | $3.8 \times 10^8$ | $2.7 \times 10^{11}$ | $3.6 \times 10^{10}$ | $2.4 \times 10^9$ | $5.8 \times 10^7$ | $4.7 \times 10^6$ | $1.2 \times 10^2$ | $3.7 \times 10^2$ | $2.6 \times 10^1$ | $1.1 \times 10^6$ | $>10^{12}$ | $>10^{12}$ | $2.9 \times 10^1$ | $2.1 \times 10^6$ | $9.8 \times 10^5$ | $3.7 \times 10^6$ | $>10^{12}$ | $>10^{12}$ | $3.5 \times 10^9$ | $1.3 \times 10^9$ |

ND : not determined

multilayered CNT: multilayered carbon nanotube (manufactured by Tsinghua Nafine, 10 – 20 nm in outer diameter,

several μm to several tens μm in length)

Table 2

| | | Example | | | | | | | | | | Referential | | | | | | Control | | | |
|---|---|---|---|---|---|---|---|---|---|---|---|---|---|---|---|---|---|---|---|---|---|
| | | 10 | 11 | 12 | 13 | 14 | 15 | 16 | 17 | 18 | 38 | 7 | 8 | 9 | 10 | 11 | 12 | 5 | 6 | 7 | 8 |
| Polyester | | 100 | 100 | 100 | 100 | 100 | 100 | 100 | 100 | 100 | 100 | 100 | 100 | 100 | 100 | 100 | 100 | 100 | 100 | 100 | 100 |
| Carbon fibrous structures | | 5 | 1.5 | 2 | 2 | 5 | 5 | 25 | 25 | 25 | 5 | 1.5 | 0.5 | 35 | 5 | 5 | 5 | | | | |
| Multilayered CNT | | | | | | | | | | | | | | | | | | 1.5 | 1.5 | 5 | 5 |
| Method | Bead mill dispersion | O | O | O | O | O | O | O | O | O | O | O | O | O | O | | | O | O | O | O |
| | Ball mill dispersion | | | | | | | | | | | | | | | O | | | | | |
| | Homogenizer dispersion | | | | | | | | | | | | | | | | O | | | | |
| | Pretreatment (high-shear type dispersion) | | | | | | | | | | O | | | | | | | | | | |
| Beads' diameter (mm) | | 1.0 | 0.05 | 0.05 | 1.5 | 0.5 | 1.0 | 0.5 | 1.0 | 1.5 | 1.0 | 0.03 | 0.05 | 0.05 | 2.0 | 0.5 | 0.5 | 0.05 | 1.5 | 0.05 | 1.5 |
| Thickness (μm) | | 0.2 | 1.0 | 1.0 | 3.0 | 0.5 | 1.5 | 1.0 | 1.0 | 4.5 | 1.5 | 1.0 | 1.0 | 1.0 | 1.0 | 1.0 | 1.0 | 1.0 | 1.0 | 1.0 | 1.0 |
| Coating ability | | O | O | O | O | O | O | O | O | O | O | O | O | × | O | O | × | O | O | O | O |
| Total light transmittance | | 83.8 | 89.2 | 84.5 | 73.8 | 83.8 | 69.8 | 52.4 | 51.7 | 33.2 | 74.8 | 87.5 | 90.2 | ND | ND | ND | ND | 24.5 | 20.1 | ND | ND |
| Surface resistivity | | $6.8 \times 10^8$ | $4.2 \times 10^{11}$ | $5.1 \times 10^{10}$ | $3.4 \times 10^9$ | $2.8 \times 10^7$ | $4.3 \times 10^6$ | $3.2 \times 10^2$ | $5.3 \times 10^2$ | $4.5 \times 10^1$ | $2.7 \times 10^6$ | $>10^{12}$ | $>10^{12}$ | $5.3 \times 10^1$ | $3.2 \times 10^6$ | $8.6 \times 10^5$ | $4.3 \times 10^6$ | $>10^{12}$ | $>10^{12}$ | $4.4 \times 10^9$ | $2.8 \times 10^9$ |

ND : not determined

multilayered CNT: multilayered carbon nanotube (manufactured by Tsinghua Nafine, 10 - 20 nm in outer diameter,

several μm to several tens μm in length)

16

Table 3

| | | Example | | | | | | | | | | Referential | | | | | | Control | | | |
|---|---|---|---|---|---|---|---|---|---|---|---|---|---|---|---|---|---|---|---|---|---|
| | | 19 | 20 | 21 | 22 | 23 | 24 | 25 | 26 | 27 | 39 | 13 | 14 | 15 | 16 | 17 | 18 | 9 | 10 | 11 | 12 |
| Phenolic resin | | 100 | 100 | 100 | 100 | 100 | 100 | 100 | 100 | 100 | 100 | 100 | 100 | 100 | 100 | 100 | 100 | 100 | 100 | 100 | 100 |
| Carbon fibrous structures | | 5 | 1.5 | 2 | 2 | 5 | 5 | 25 | 25 | 25 | 5 | 1.5 | 0.5 | 35 | 5 | 5 | 5 | | | | |
| Multilayered CNT | | | | | | | | | | | | | | | | | | 1.5 | 1.5 | 5 | 5 |
| Method | Bead mill dispersion | O | O | O | O | O | O | O | O | O | O | O | O | O. | O | | | O | O | O | O |
| | Ball mill dispersion | | | | | | | | | | | | | | | O | | | | | |
| | Homogenizer dispersion | | | | | | | | | | | | | | | | O | | | | |
| | Pretreatment (high- shear type dispersion) | | | | | | | | | | O | | | | | | | | | | |
| Beads' diameter (mm) | | 1.0 | 0.05 | 0.05 | 1.5 | 0.5 | 1.0 | 0.5 | 1.0 | 1.5 | 1.0 | 0.03 | 0.05 | 0.05 | 2.0 | 0.5 | 0.5 | 0.05 | 1.5 | 0.05 | 1.5 |
| Thickness (μm) | | 0.2 | 1.0 | 1.0 | 3.0 | 0.5 | 1.5 | 1.0 | 1.0 | 4.5 | 1.5 | 1.0 | 1.0 | 1.0 | 1.0 | 1.0 | 1.0 | 1.0 | 1.0 | 1.0 | 1.0 |
| Coating ability | | O | O | O | O | O | O | O | O | O | O | O | O | × | O | O | × | O | O | O | O |
| Total light transmittance | | 82.1 | 89.5 | 81.2 | 74.8 | 82.4 | 65.2 | 51.9 | 50.3 | 33.6 | 72.5 | 88.7 | 89.6 | ND | ND | ND | ND | 18.6 | 13.8 | ND | ND |
| Surface resistivity | | $4.9 \times 10^8$ | $4.2 \times 10^{11}$ | $5.7 \times 10^{10}$ | $4.1 \times 10^9$ | $7.3 \times 10^7$ | $5.2 \times 10^6$ | $3.2 \times 10^2$ | $5.2 \times 10^2$ | $8.6 \times 10^1$ | $1.6 \times 10^6$ | $>10^{12}$ | $>10^{12}$ | $4.2 \times 10^1$ | $3.4 \times 10^6$ | $1.6 \times 10^6$ | $5.3 \times 10^6$ | $>10^{12}$ | $>10^{12}$ | $3.9 \times 10^9$ | $2.3 \times 10^9$ |

ND : not determined

multilayered CNT: multilayered carbon nanotube (manufactured by Tsinghua Nafine, 10 – 20 nm in outer diameter,

several μm to several tens μm in length)

Table 4

| | | Example | | | | | | | | | | Referential | | | | | | Control | | | |
|---|---|---|---|---|---|---|---|---|---|---|---|---|---|---|---|---|---|---|---|---|---|
| | | 28 | 29 | 30 | 31 | 32 | 33 | 34 | 35 | 36 | 40 | 19 | 20 | 21 | 22 | 23 | 24 | 13 | 14 | 15 | 16 |
| Phenolic resin | | 100 | 100 | 100 | 100 | 100 | 100 | 100 | 100 | 100 | 100 | 100 | 100 | 100 | 100 | 100 | 100 | 100 | 100 | 100 | 100 |
| Carbon fibrous structures | | 5 | 1.5 | 2 | 2 | 5 | 5 | 25 | 25 | 25 | 5 | 1.5 | 0.5 | 35 | 5 | 5 | 5 | | | | |
| Multilayered CNT | | | | | | | | | | | | | | | | | | 1.5 | 1.5 | 5 | 5 |
| M e t h o d | Bead mill dispersion | O | O | O | O | O | O | O | O | O | O | O | O | O | O | | | O | O | O | O |
| | Ball mill dispersion | | | | | | | | | | | | | | | O | | | | | |
| | Homogenizer dispersion | | | | | | | | | | | | | | | | O | | | | |
| | Pretreatment (high- shear type dispersion) | | | | | | | | | | O | | | | | | | | | | |
| Beads' diameter (mm) | | 1.0 | 0.05 | 0.05 | 1.5 | 0.5 | 1.0 | 0.5 | 1.0 | 1.5 | 1.0 | 0.03 | 0.05 | 0.05 | 2.0 | 0.5 | 0.5 | 0.05 | 1.5 | 0.05 | 1.5 |
| Thickness (μm) | | 0.2 | 1.0 | 1.0 | 3.0 | 0.5 | 1.5 | 1.0 | 1.0 | 4.5 | 1.5 | 1.0 | 1.0 | 1.0 | 1.0 | 1.0 | 1.0 | 1.0 | 1.0 | 1.0 | 1.0 |
| Coating ability | | O | O | O | O | O | O | O | O | O | O | O | O | × | O | O | × | O | O | O | O |
| Total light transmittance | | 87.2 | 88.5 | 84.8 | 76.2 | 85.1 | 66.4 | 54.3 | 53.7 | 34.6 | 76.5 | 90.2 | 89.5 | ND | ND | ND | ND | 32.1 | 28.7 | ND | ND |
| Surface resistivity | | $5.2 \times 10^8$ | $1.4 \times 10^{11}$ | $1.9 \times 10^{11}$ | $2.1 \times 10^9$ | $3.5 \times 10^7$ | $2.5 \times 10^6$ | $1.8 \times 10^2$ | $4.5 \times 10^2$ | $4.8 \times 10^1$ | $1.2 \times 10^6$ | $>10^{12}$ | $>10^{12}$ | $5.1 \times 10^1$ | $3.6 \times 10^6$ | $5.3 \times 10^5$ | $2.4 \times 10^6$ | $>10^{12}$ | $>10^{12}$ | $5.5 \times 10^9$ | $3.3 \times 10^9$ |

ND : not determined

multilayered CNT: multilayered carbon nanotube (manufactured by Tsinghua Nafine, 10 – 20 nm in outer diameter,

several μm to several tens μm in length)

**Claims**

1. Transparent conductive film comprising a matrix resin and carbon fibrous structures added to the matrix, the carbon fibrous structure comprising carbon fibers each having an outside diameter of 15 - 100 nm, wherein the carbon fibrous structure further comprises a granular part with which two or more carbon fibers are tied together in the state that the concerned carbon fibers are externally elongated therefrom, and wherein the granular part is produced at a growth process of the carbon fibers.

2. Transparent conductive film according to Claim 1, wherein the carbon fibrous structures are added at an amount in the range of 1 to 25 parts by weight based on 100 parts by weight of the matrix resin.

3. Transparent conductive film according to Claim 1 or 2, wherein the transparent conductive film has a surface resistivity of not more than $1.0 \times 10^{12}\,\Omega/\square$ , and a total light transmittance of not less than 30%, when the transparent conductive film is formed at a thickness of 0.1 - 5 $\mu$m on a glass substrate.

4. Coating composition for transparent conductive film, which comprising a liquid resinous composition including a resin as a non-volatile vehicle, and carbon fibrous structures dispersed in the resinous composition, the carbon fibrous structure comprising carbon fibers each having an outside diameter of 15 - 100 nm, wherein the carbon fibrous structure further comprises a granular part with which two or more carbon fibers are tied together in the state that the concerned carbon fibers are externally elongated therefrom, and wherein the granular part is produced at a growth process of the carbon fibers.

5. Coating composition according to Claim 4, wherein the carbon fibrous structures are added at an amount in the range of 1 to 25 parts by weight based on 100 parts by weight of the liquid resinous composition.

6. Coating composition according to Claim 4 or 5, wherein the coating composition is prepared by using a media mill equipped with beads having an average diameter of 0.05 - 1.5 mm to disperse the carbon fibrous structures into the liquid resinous composition.

7. Coating composition according to Claim 6, wherein the coating composition is prepared by using a high-shear type distributor in addition to and in advance of the dispersion treatment using the media mill.

FIG.1

FIG. 2A

FIG. 2B

FIG. 3

FIG. 4

FIG. 5

<table>
<tr><td colspan="2" align="center">**INTERNATIONAL SEARCH REPORT**</td><td>International application No.<br>PCT/JP2006/303792</td></tr>
</table>

| A. CLASSIFICATION OF SUBJECT MATTER |
|---|
| *H01B5/14*(2006.01), *H01B1/24*(2006.01), *H01B13/00*(2006.01), *C08J5/18* (2006.01), *C08K7/06*(2006.01), *C08L101/00*(2006.01), *D01F9/127*(2006.01), *C01B31/02*(2006.01) |
| According to International Patent Classification (IPC) or to both national classification and IPC |

| B. FIELDS SEARCHED |
|---|
| Minimum documentation searched (classification system followed by classification symbols)<br>D01F9/127, C01B31/02, H01B5/14, H01B1/24, H01B13/00, C08J5/18, C08K7/06, C08L101/00 |
| Documentation searched other than minimum documentation to the extent that such documents are included in the fields searched<br>  Jitsuyo Shinan Koho        1922-1996  Jitsuyo Shinan Toroku Koho   1996-2006<br>  Kokai Jitsuyo Shinan Koho   1971-2006  Toroku Jitsuyo Shinan Koho   1994-2006 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
|---|---|---|
| X<br>Y | JP 2002-266170 A  (Showa Denko Kabushiki Kaisha),<br>18 September, 2002 (18.09.02),<br>Par. Nos. [0017], [0031], [0038] to [0039], [0041], [0045]; Fig. 3<br>& WO 2002/049412 A1   & US 2004/0036060 A1 | 1-5<br>6,7 |
| Y<br>A | JP 2003-227039 A  (Showa Denko Kabushiki Kaisha),<br>15 August, 2003 (15.08.03),<br>Par. Nos. [0012], [0015], [0017], [0022], [0040], [0062] to [0063]<br>& WO 03/040445 A1 | 6,7<br>1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>  10 May, 2006 (10.05.06) | Date of mailing of the international search report<br>  23 May, 2006 (23.05.06) |
|---|---|
| Name and mailing address of the ISA/<br>  Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/303792 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2004-256964 A  (Teijin Ltd.),<br>16 September, 2004 (16.09.04),<br>Full text<br>(Family: none) | 6,7 |
| P,A | JP 3720044 B  (Bussan Nanotech Research<br>Institute Inc.),<br>16 September, 2005 (16.09.05),<br>Full text<br>(Family: none) | 1-7 |
| E,A | JP 2006-89711 A  (Bussan Nanotech Research<br>Institute Inc.),<br>06 April, 2006 (06.04.06),<br>Full text<br>(Family: none) | 1-7 |
| A | WO 2004/007820 A1  (Bussan Nanotech Research<br>Institute Inc.),<br>22 January, 2004 (22.01.04),<br>Full text<br>(Family: none) | 1-7 |
| A | JP 11-353947 A  (Takiron Co., Ltd.),<br>24 December, 1999 (24.12.99),<br>Full text<br>(Family: none) | 1-5 |

Form PCT/ISA/210 (continuation of second sheet) (April 2005)

## INTERNATIONAL SEARCH REPORT

| International application No. |
| --- |
| PCT/JP2006/303792 |

---

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

---

**Box No. III      Observations where unity of invention is lacking (Continuation of item 3 of first sheet)**

This International Searching Authority found multiple inventions in this international application, as follows:

Matter common to claims 1 to 7, i.e., "the carbon fiber structure being formed of carbon fibers having an outer diameter of 15 to 100 nm, wherein, in an embodiment where a plurality of the carbon fibers are extended, the carbon fiber structure has a granular part for mutually bonding the carbon fibers and the granular part has been formed in the process of the growth of the carbon fibers", is described in JP 2002-266170 A (Showa Denko Kabushiki Kaisha) 18 September, 2002 (18.09.02) as a prior art document and, thus, cannot be a special technical feature.

Thus, there is no technical relationship between the inventions of claims 1 to 7 involving one or more of the same or  (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the      payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

| INTERNATIONAL SEARCH REPORT | International application No. |
| --- | --- |
| | PCT/JP2006/303792 |

Continuation of Box No.III of continuation of first sheet(2)

corresponding special technical features, so that the inventions of claims 1 to 7 are not considered as being so linked as to form a single general inventive concept.

Form PCT/ISA/210 (extra sheet) (April 2005)

**EP 1 876 605 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001062952 A
- JP 2004195993 A

- JP 2004230690 A

**Non-patent literature cited in the description**

- Latest Experimental Technique For Carbon Materials (Analysis Part. 2001